# EUROPÄISCHE PATENTSCHRIFT

(11) **EP 2 235 601 B1**
(45) Veröffentlichungstag und Bekanntmachung des Hinweises auf die Patenterteilung: **02.04.2014**
(21) Anmeldenummer: 08863390.4
(22) Anmeldetag: 02.12.2008
(51) Int. Cl.: F16H 63/38, F16H 59/70, G05G 5/06

(54) **SCHALTEINHEIT UND VERFAHREN ZU IHRER HERSTELLUNG**
SWITCHING UNIT AND METHOD FOR THE PRODUCTION THEREOF
UNITÉ DE COMMUTATION ET SON PROCÉDÉ DE FABRICATION

(30) Priorität: 19.12.2007 DE 102007061320
(43) Veröffentlichungstag der Anmeldung: 06.10.2010
(73) Patentinhaber: Schaeffler Technologies GmbH & Co. KG, 91074 Herzogenaurach (DE)
(72) Erfinder: MASSINI, Stanislav, 90579 Langenzenn (DE); OBERPERTINGER, Gerhard, 91325 Adelsdorf (DE); TRISSLER, Arnold, 91074 Herzogenaurach (DE)
(86) Internationale Anmeldenummer: PCT/EP2008/066615
(87) Internationale Veröffentlichungsnummer: WO 2009/077326

(56) Entgegenhaltungen:
- EP-A- 0 368 754
- EP-A- 0 523 645
- EP-A- 1 152 174
- DE-A1- 3 413 230
- DE-A1- 4 307 596
- DE-A1- 10 105 630
- DE-C1- 4 119 316
- DE-C1- 4 330 917
- DE-C1- 19 707 595
- US-A- 3 710 048

## Beschreibung

### Gebiet der Erfindung

Die Erfindung betrifft eine Sensorschalteinheit zur Lagefixierung eines beweglichen Getriebebauteils, insbesondere einer Schaltstange eines Kraftfahrzeuggetriebes.

### Hintergrund der Erfindung

Die Sensorschalteinheit dient zur Bestimmung von Stellungen wenigstens eines Getriebebauteils. Sie besteht aus einer Schaltarretierung zum Arretieren von Getriebeschaltpositionen, wobei die Schaltarretierung ein Arretiergehäuse und einen Schaltbolzen aufweist. Der Schaltbolzen ist hubbeweglich in dem Arretiergehäuse gelagert und gegen das Getriebebauteil vorspannbar. Ferner weist die Sensorschalteinheit eine Sensorik bestehend aus einem Signalgeber als erstem Sensorikelement und einem Sensor als weiterem Sensorikelement und ein Gehäuse mit einer Aufnahme für die Schaltarretierung auf.

Bei vielen derartigen Sensorschalteinheiten weist der Schaltbolzen an seiner Stirnseite ein geführtes Rastelement auf. Es ist vorzugsweise kugelförmig ausgebildet und greift in eine Ablaufbahn des Stellelements ein. Derartige Schaltarretierungen, die auch als Kugelrasten bezeichnet werden, finden insbesondere in Kraftfahrzeuggetrieben Anwendung, wobei die Rastelemente der Schaltarretierungen in entsprechende Ausnehmungen der Schaltstangen oder der Rastausnehmungen der Schaltelemente eingreifen.

DE 43 07 596 A1 zeigt eine Schalteinheit mit einer derartigen Schaltarretierung. Diese ist gegen eine Welle vorgespannt, wobei sie mit ihrem Rastelement in in die Welle eingebrachte Nuten eingreift. Die Schaltarretierung betätigt einen Schalter, um beispielsweise ein Rückfahrlicht zu schalten. Soll jedoch eine derartige Schaltarretierung eine Gangerkennung ermöglichen, ist es erforderlich, sehr präzise die Position des Signalgebers festzulegen, um die Sensorik des Rastelements zu kalibrieren. Für die Massenherstellung ist es erforderlich, eine Schaltarretierung bereitzustellen, die mit möglichst vielen Sensoren gut zusammenwirkt und die sich nicht am Arretiergehäuse verklemmt.

EP 1 152 174 A1 zeigt eine Schalteinheit mit einer Schaltarretierung, deren Arretierstellungen berührungslos detektierbar sind. Bei nicht exakter Positionierung des Trägers mit dem Magneten kann auch hier ein Verklemmen auftreten.

### Aufgabe der Erfindung

Die Aufgabe der Erfindung ist es daher, eine Sensorschalteinheit zu schaffen, welche kostengünstig für große Stückzahlen herstellbar ist.

Erfindungsgemäß wird die Aufgabe gemäß Anspruch 1 gelöst. Ein Sensorikelement der Sensorschalteinheit ist an dem Schaltbolzen oder einem an einem mit dem Schaltbolzen in Wirkverbindung stehenden Bauteil, beispielsweise einem schaftartigen Träger, angeordnet. Prinzipiell ist es jedoch möglich, die Position des Signalgebers und des Signalempfängers zu vertauschen. Das zweite, dem ersten zugeordnete Sensorikelement, im folgenden also der Sensor als Signalempfänger, ist dem Gehäuse angeordnet. Durch die außenumfänglich kantenlose integration des Sensorikelements in den Träger ist die Gefahr eines Verkippens des Trägers reduziert, so dass die Schaltarretierung zuverlässig arbeitet.

Unter außenumfänglich kantenloser Integration wird dabei verstanden, dass die aus der Träger und dem Signalgeber gebildete Einheit an ihrem Außenumfang keinen Versatz aufweist, so dass keine auskragenden Bauteile vorhanden sind, die verkanten können. Im Längsschnitt gesehen weist der Träger also keine radial hervorstehenden Vorsprünge auf. Die äußeren Maße des Magneten sind auf die Form des Trägers abgestimmt. Die Baueinheit aus dem Träger und dem Signalgeber ist derart formschlüssig oder einteilig ausgebildet, dass sie von radial außen aus gesehen geometrisch als Einheit erscheint.

Die Schaltarretierung ist mit dem Gehäuse fest verbunden. Sie ist so ausgebildet, dass durch den Austausch des Trägers die Schaltarretierung an verschiedene Gehäusetypen mit unterschiedlichen Sensoren anpassbar ist. Es ist damit beispielsweise möglich, stets im optimalen Arbeitsbereich des Sensorsignalgeberpaares zu arbeiten.

Die Schaltarretierung ist separat vom Gehäuse hergestellt und mit diesem form- und/oder kraftschlüssig verbindbar. Ebenso sind der Signalgeber und der Schaltbolzen separat voneinander hergestellt und miteinander verbindbar.

In einer Variante der Erfindung ist dem Signalgeber genau eine Aufnahmeposition zugeordnet. Sie ermöglicht einen festen Sitz des Magneten. Idealerweise ist der Magnet beispielsweise mittels eines verschnappenden Elements gesichert, so dass Erschütterungen nicht zu einem unerwünschten Deplatzieren führen.

Alternativ dazu kann der Träger mehrere Aufnahmepositionen kontinuierlicher Art aufweisen. In einer Ausführungsform weisen der Schaltbolzen oder ein mit dem Schaltbolzen in Wirkverbindung stehender Träger ein Außengewinde auf. Der Magnet weist ein zum Außengewinde komplementäres innengewinde auf, so dass er verschraubbar ist und in Axialrichtung zunächst kontinuierlich verstellbar ist. Vorzugsweise sind der Magnet und der Schaltbolzen rotationssymmetrisch ausgebildet.

Die Schaltarretierung besitzt in einer weiteren Ausführungsform ein geschlossenes Arretiergehäuse, so dass zum einen keine einzelnen Bauteile verloren oder dejustiert werden können. Dies vereinfacht die Handhabung, den Transport und die Montage. Zum anderen ist die Schaltarretierung dadurch gut gegen das Eindringen von Verunreinigungen geschützt.

Zumindest ein Sensorikelement dient als Signalgeber. Der Signalgeber gibt permanent oder temporär Signale konstanter oder wechselnder Folge ab, die geeignet sind durch einen oder mehrere zum Signalgeber bzw. zur Signalquelle angeordneten Sensoren als zweite Sensorikelemente erfasst zu werden. Der Signalgeber gibt zum Beispiel Lichtsignale, Schallwellen oder magnetische Impulse ab. Beispiele für permanente Signalgeber sind Dauermagneten, z.B. mit einander abwechselnder oder entgegen gerichteter Polarisation. In einer Ausführungsart der Erfindung erfolgt die Signalübertragung vom Signalgeber zum Sensor berührungslos. Darunter wird das kontaktlose Erfassen der von einem oder mehreren Signalgebern abgehenden Signale durch einen oder mehrere Sensoren verstanden, wobei die Sensoren vom Signalgeber beispielsweise durch einen Gas- oder Flüssigkeitsspalt von diesem getrennt sind.

Der Arretierbolzen ist federnd gegen eine Ablaufbahn auf dem Getriebebauteil vorgespannt. Die Ablaufbahn ist durch Positionsdaten von Wähl- und Schaltstellungen und durch Positionsdaten der Kontur der Ablaufbahn zwischen diesen Wähl- und Schaltstellungen beschrieben. Die Kontur der Ablaufbahn weist Gefälle, Steigungen, Vertiefungen, Peaks, Plateaus usw. auf, die sich durch die Positionsdaten beschreiben lassen, Konkreten Stellungen des Getriebebauteils, Neutralstellungen, Wähl- und Schaltstellungen, sind charakteristische Positionsdaten zugeordnet. Konkrete Stellungen sind zum Beispiel die Neutralstellungen "normal" und eventuell weitere Neutralstellungen zur Abbildung von Referenzwerten sowie die Stellungen der Vorwärtsgänge oder des Rückwärtsgangs. Einzelne konkrete Schaltstellungen weisen in der Regel jeweils die gleichen wiederholbaren charakteristischen Positionsdaten, alternativ auch wechselnde Positionsdaten, auf.

Die charakteristischen Positionsdaten sind nach einem bestimmten Schema durch eine Kette dazwischen aneinander gereihter Positionsdaten miteinander verbunden, die den Weg für die Abtasteinrichtung auf der Ablaufbahn von einer der Stellungen zur anderen definieren, Das Schema ist durch eine zwei- oder dreidimensionale Struktur aus Vertiefungen und Erhöhungen an der Oberfläche der Ablaufbahn vorgegeben. Die verschiedenen Vertiefungen und Erhöhungen an der Oberfläche der Ablaufbahnen sind rampenartig aufsteigend oder abfallend miteinander zu einer Rampenkontur verbunden, die zu der Kette von beliebig vielen nebeneinander angeordneten und übergangslos miteinander verbundenen Positionsdaten aneinander gereiht sind. Die Positionsdaten sind somit in der einfachen Form ein- bzw. zweidimensionale Koordinaten oder Strecken, die Höhenunterschiede der Oberfläche zu definierten Bezugsebenen oder Bezugslinien der Ablaufbahn wiedergeben, auf die der Schaltbolzen mit entsprechenden Längshüben reagiert.

Wenn der Schaltbolzen von einer Referenzposition weg auf der Ablaufbahn entlang fährt, wird er sich dieser aufgrund der Höhenunterschiede vom Referenzwert um bestimmte Hübe entfernen oder sich schließlich diesem um bestimmte Hübe wieder nähern. Die mit dem Schaltbolzen gekoppelten Signalgeber werden somit von der Referenzlage abweichende Positionen zu den Sensoren einnehmen.

Jeder der Stellungen des Getriebebauteils ist somit ein bestimmter Hub des Schaltbolzens zugeordnet. Dem jeweiligen Hub des Schaltbolzens ist eine Lage eines oder mehrerer Signalgeber zum Sensor zugeordnet. Ausgehend von der Referenziage, die die Signalgeber bei Referenzstellung des Schaltbolzens eingenommen haben, sind diese je nach Stellung des Getriebebauteils im Vergleich zur Referenziage gleich dicht bzw. dichter an dem Sensor oder weiter weg von diesem. Denkbar ist auch, dass jeder charakteristischen Stellung ein anderer Sensor bzw, ein anderer Signalgeber in gleicher oder anderer Ausführung zum vorherigen zugeordnet ist.

Den vorausgehenden Ausführungen folgend, ist somit jeder der Wähl- oder Schaltstellung des Getriebebauteils ein bestimmter Längshub des Schaltbolzens zugeordnet. Das dem Hub entsprechende Signal wird mit der Sensorik und Auswerteelektronik in eine Information über die Stellung des Getriebebauteils umgewandelt. Das Signal wird beispielsweise an die Bordelektronik zur Regelung von Betriebs- und Fahrzuständen weitergeleitet oder in einem Display als Wähl- bzw. Gangstellung angezeigt.

Vertiefungen an der Oberfläche der Ablaufbahn sind auch als Rastvertiefungen ausgebildet, in die der Schaltbolzen der Abtasteinheit mit der Spitze einrastet und beispielsweise das Getriebebauteil in den Schaltstellungen arretiert. Diesen Raststellungen ist ebenfalls ein entsprechender Hub bzw. einer definierte Messmenge von Positionsdaten zugeordnet.

Positionsdaten sind unterschiedliche Durchmesser oder Radialhübe umfangseitig verlaufender Laufbahnen, die radial abgetastet werden und die somit in radial gerichteten Längshüben des Schaltbolzens resultieren. Die relative axiale Position des Schaltbolzens zur Ablaufbahn ist fix.

Alternativ dazu sind Positionsdaten sind die Tiefen und Höhen von axialen Vertiefungen und Erhöhungen in unterschiedlichen Ebenen einer axial oder in Längsrichtung abgetasteten und somit in axiale Richtung unebenen Ablaufbahn, Der Schaltbolzen ist in diesem Fall axial und somit mit der Rotation-, Schwenk bzw. Längsachse gleich ausgerichtet hubbeweglich. Positionsdaten sind alternativ, oder gleichzeitig zu vorgenannten Varianten, die Durchmesser oder Radialabstände beliebiger Mengen von axial zueinander benachbarten Umfangslinien, die in axialer Reihenfolge nacheinander abgetastet werden. Die Ablaufbahn verläuft in diesem Fall in Längsrichtung - also senkrecht zur Radialrichtung.

Der Schaltbolzen ist längsbeweglich in dem Arretiergehäuse gelagert. Wenigstens eine Feder ist in die gleiche Längsrichtung in dem oder in einem weiteren Arretiergehäuse abgestützt und spannt zumindest bei Betrieb der Abtasteinrichtung den Bolzen gegen die Ablaufbahn. Der Schaltbolzen ist innen hohl und führt einen Teil der in diesem Fall als Druckfeder ausgebildeten Feder. Die Spitze des Schaltbolzens ist für den Kontakt mit der Ablaufbahn verrundet oder mit einer Kugel versehen. Die in einer Kalotte ums eigene Zentrum rotierbar aufgenommene Kugel ist wahlweise in der Kalotte kugelgelagert.

Die Sensorschalteinheit weist mindestens einen Träger für den Signalgeber und zumindest einen Sensor auf. Der Träger ist zumindest dann durch den Schaltbolzen aktivierbar, wenn die Positionsdaten erfasst werden sollen und ist vorzugsweise eine als Schaft ausgebildete Stange. Der Träger ist vorzugsweise koaxial mit dem Schaltbolzen in die gleiche Längsrichtung in dem Arretiergehäuse gelagert, in dem auch der Schaltbolzen längsbeweglich ist. Zwischen dem Schaltbolzen und dem Träger besteht entweder permanent oder zeitweise in Längsrichtung Kontakt. Alternativ ist zwischen Schaltbolzen und Träger eine Übertragungseinrichtung für permanenten oder bedarfsweise Verbindung angeordnet, Der Träger ist entweder an dem Schaltbolzen befestigt oder an diesem geführt oder liegt durch Wirkung einer Feder an diesem an.

Der Schaltbolzen ist wahlweise in dem vorzugsweise aus Blech bestehenden Arretiergehäuse gleit- oder wälzgelagert. Eine oder mehrere Federn sind Schraubenfedern und/oder Tellerfedern pro Sensorschalteinheit. Mit der Erfindung ist eine Einrichtung zu Mehrbereichsmessung von Schalt- und Wählstellungen geschaffen, die sich einfach, robust und kostengünstig herstellen lässt.

Der Schaltbolzen ist in einer Ausgestaltung der Erfindung an den Innenflächen der Schaltarretierung axial verschieblich angeordnet, und eine Druckfeder stützt sich am Schaltbolzen und am Arretiergehäuse ab. Die Schaltkraft der Schaltarretierung wird insbesondere durch die Kraft der Druckfeder bestimmt, die zwischen dem Schaltbolzen und dem Arretiergehäuse eingesetzt ist. Ein vorzugsweise kugelförmiges Rastelement greift in eine Ausnehmung des Stellelements ein und ist an der Stirnseite des Schaltbolzens geführt. Der Boden des Arretiergehäuses weist eine Ausnehmung auf, durch welche der schaftartige Träger geführt ist. Der Schaft ist teilweise im Arretiergehäuse angeordnet und verläuft dort parallel innerhalb der Druckfeder und stützt sich endseitig am Schaltbolzen ab. Außerhalb des Gehäuses weist der Schaft einen Aufnahmeabschnitt für den Sensor oder den Signalgeber auf.

Zur Erreichung einer Verliersicherung im nicht eingebauten Zustand der Schaltarretierung bzw. zur Erreichung einer Stellwegbegrenzung des Rastbolzens im eingebauten Zustand kann die Schaltarretierung mit einer axialen Sicherung versehen sein.

Der Träger besteht aus nicht ferromagnetischen Metallen oder Nichtmetallen. Die Verwendung von Kunststoff für den Träger und auch für das Gehäuse der Sensorik ist vorgesehen. Der Kunststoff des Trägers und auch des Gehäuses kann dabei zumindest partiell mit magnetisierbaren Partikeln durchsetzt sein, die nach verschiedensten Mustern magnetisiert sind. Alternativ dazu ist der gesamte Träger aus einem ferromagnetischen Material und wirkt als Magnet.

In einer Weiterbildung der Erfindung ist das Sensorikelement am Träger nach erfolgter Justage durch ein Sicherungshilfsmittel fixiert. Dies kann erforderlich sein, sofern das Sensorikelement bezüglich des Trägers frei positionierbar ist, um ein unerwünschtes Verstellen während des Betriebs zu verhindern. Ein geeignetes Sicherungshilfsmittel stellt beispielsweise eine Sicherungsscheibe dar. Es können allerdings auch statt mechanischer Befestigungsmittel Befestigungsverfahren zum Einsatz kommen wie beispielsweise ein Verkleben.

Vorzugsweise sind der Träger und der Signalgeber verstemmt.

Der Schaltbolzen weist an dem Ende, an dem das Sensorikelement fixiert wird, ein verjüngtes Ende auf. Bei gleich bleibender Feldstärke des Magneten wird somit die Breite der Einheit reduziert, was insgesamt Bauraum spart. Das verjüngte Ende ist kreiszylindrisch, und der Magnet weist eine zentrische, ebenfalls kreiszylindrische Ausnehmung auf, über welche er mit dem verjüngten Ende verbindbar ist.

In einer weiteren Ausbildungsform weist der Träger an seinem Umfang einen von der runden Form abweichenden Querschnitt auf. Dies kann dessen Herstellung aus spritzgusstechnischen Gründen erleichtern bzw. zu einer Materialersparnis führen.

Die vorgestellte Erfindung eignet sich besonders, um eine Gangerkennung zu realisieren. Dazu sind die Rastvertiefungen in dem Getriebebauteil unterschiedlich ausgebildet, so dass ein empfindliches Paar aus einem Magneten als Signalgeber und einem Hohlsensor eine präzise Gangerkennung ermöglichen. Diese kontaktlose Sensorik arbeitet verschleißfrei. Prinzipiell sind auch andere Signalgeber und Sensoren als Signaldetektoren denkbar. So kann es sich bei dem Sensor um einen Drucksensor, um einen Helligkeitssensor oder um einen anderen berührungsfrei oder berührungsgebunden arbeitenden Sensor handeln.

### Kurze Beschreibung der Zeichnungen

Im folgenden wird die Erfindung anhand von Figuren näher erläutert. Es zeigen:
- Figur 1: eine erfindungsgemäße Sensorschalteinheit,
- Figur 2: einen ersten, nicht erfindungsgemäßen Träger,
- Figur 3: einen zweiten, nicht erfindungsgemäßen Träger,
- Figur 4: einen dritten, nicht erfindungsgemäßen Träger,
- Figur 5: einen vierten, nicht erfindungsgemäßen Träger,
- Figur 6: einen fünften erfindungsgemäßen Träger,
- Figur 7: einen sechsten erfindungsgemäßen Träger.

### Ausführliche Beschreibung der Zeichnungen

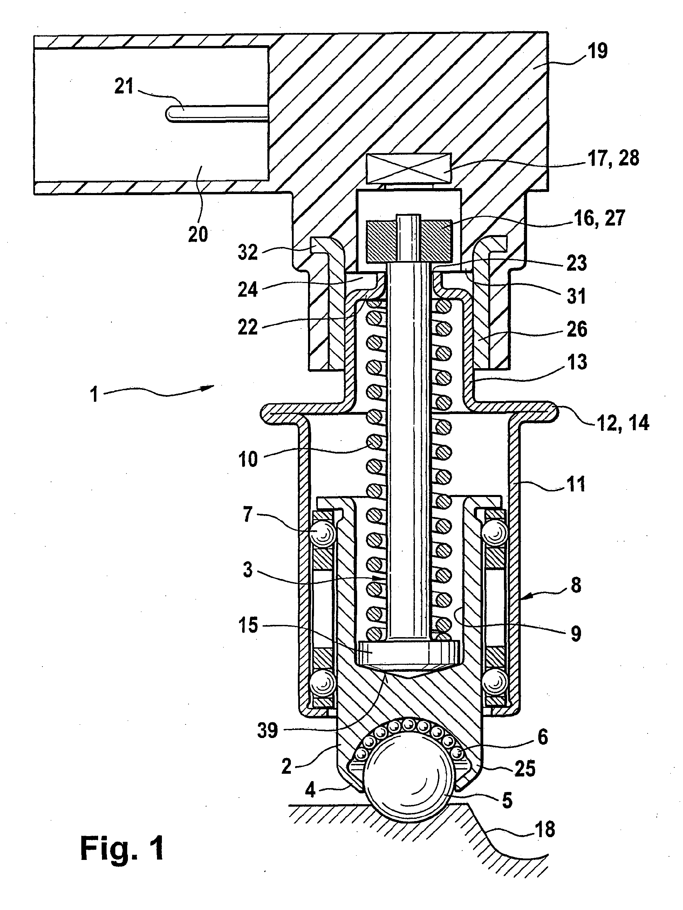

In Figur 1 ist eine Sensorschalteinheit 1 im Vollschnitt abgebildet. Die Sensorschalteinheit 1 besteht aus einer Schaltarretierung 25 und einem Gehäuse 19. Die Schaltarretierung weist einen Schaltbolzen 2 aus Metall mit einer Kalotte 4 und einen als Schaft ausgebildeten Träger 3 auf. Endseitig nach außen weisend ist am Schaltbolzen 2 eine Kugel 5 angeordnet, die mittels weiterer Wälzkugeln 6 in der Kalotte 4 wälzgelagert ist. Die Kugel 5 ist gegen eine Ablaufbahn 18 vorspannbar. Das Gehäuse 19 ist mit dem Arretiergehäuse 8 über eine Hülse 26 verpresst. Eine separate Dichtung kann daher entfallen.

Der Schaltbolzen 2 ist mittels eines Wälzlagers 7 in einem Arretiergehäuse 8 aus Metall hubbeweglich gelagert und geführt. Der Schaltbolzen 2 ist mit einer sacklochartigen Bohrung 9, die hier kreisförmig im Querschnitt ist, versehen, wobei in der Bohrung 9 eine Feder 10 in Form einer Schraubenfeder aufgenommen ist. Durch die Bohrung 9 im Schaltbolzen 2 wird eine Verkürzung der Baueinheit und somit eine Raum sparende Anordnung erreicht. Die Feder 10 ist vorgespannt und stützt sich am Bohrungsboden 39 des Schaltbolzens 2 und am Arretiergehäuse 8 ab.

Der Träger 3 ist innerhalb der Feder 10 geführt, wobei die Feder 10 sich einerseits in der Bohrung 9 des Schaltbolzens 2 und andererseits an dem Boden 22 des Arretiergehäuses 8 abstützt. Der Boden 22 des Arretiergehäuses 8 weist eine kreisförmige Ausnehmung 23 auf, durch die der Träger 3 in eine Aufnahme 24 ragt, so dass er durch das Arretiergehäuse 8 gleitgelagert ist bzw. geführt wird. Endseitig ist der Träger 3 verjüngt und nimmt einen ringförmigen Permanentmagneten als Signalgeber 16 auf.

Die Aufnahme 24 ist im Wesentlichen kreiszylindrisch ausgebildet und weist etwa in ihrer Mitte einen ringförmigen Absatz 31 auf. Der Absatz 31 hält einerseits die Hülse 26 und kann länger als erforderlich ausgebildet sein, um eine maximale Einpresstiefe vorzugeben. Die Hülse 26 ist an dem von der Schaltarretierung 25 abgewandten Ende mit einer abgewinkelten, umlaufenden Wandung 32 versehen und in dem Gehäuse 19 umspritzt, wobei anstatt der Wandung 32 auch mehrere Lappen treten können.

Das Arretiergehäuse 8 ist in drei Abschnitte 11, 12, 13 unterteilt, wobei der erste und der dritte Abschnitt 13, 11 zylindrisch ausgebildet sind. Der zweite Abschnitt 12 ist als Dopplung 14 ausgebildet. Es ist auch denkbar, dass das Arretiergehäuse 8 eine einfache, zylindrische Blechhülse ist.

Die Sensorik besteht zumindest aus einem Signalgeber 16 als erstem Sensorikelement 27 und einem als Sensor 17 bezeichneten Signalempfänger als zweitem Sensorikelement 28. Das Gehäuse 19 ist aus Kunststoff oder aus Metall. Die Sensorik weist weiterhin eine Schnittstelle zum Fahrzeug in Form eines Steckkontakts 20 mit einem Druckstift 21 auf. Die Sensorik ist als berührungslose Sensorik ausgeführt. Der Sensor 17 ist ein Hall-Sensor, und der Signalgeber 16 ist ein Permanentmagnet. Die Signalerzeugung verläuft somit berührungslos. Sowohl das Gehäuse 19 als auch die Schaltarretierung 25 sind separat voneinander herstellbar und transportierbar, ohne dass funktionswesentliche Bauteile verschmutzen können.

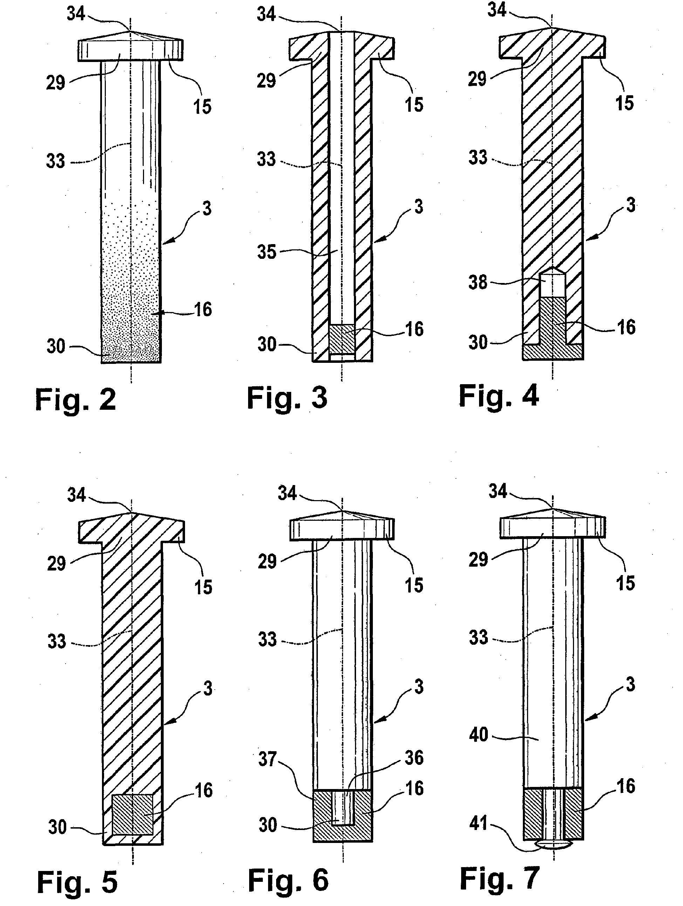

Erfindungsgemäße Träger 3 sind in den Figuren 6 und 7 dargestellt. Sie weisen alle eine im Wesentlichen schaftartige Außenkontur auf, wobei jeweils ein Schaftende 29 einen umlaufenden Bord 15 aufweist, der den Träger 3 radial verbreitert. Mittels des Bordes 15 wird der Träger 3 durch die Feder 10 gegen den Bohrungsboden 39 vorgespannt, und der Träger 3 kann sich in der Bohrung 9 abstützen, ohne zu verkippen, wobei der Träger 3 gleichzeitig masseoptimiert ausgebildet ist. Das Schaftende 29 ist weiterhin nicht axial plan ausgebildet, sondern weist zur Rotationsachse 33 hin eine Kegelspitze 34 auf, wodurch die Anlagefläche zum Bohrungsboden 39 vergrößert ist, was eine geringe Flächenpressung bewirkt.

Figur 2 zeigt einen nicht beanspruchten Träger 3, der als ganzes als ein Magnet ausgebildet ist. Er besteht aus einem ferromagnetischen oder zumindest aus einem magnetisierbaren Material und ist aufgrund seiner Homogenität einfach zu fertigen.

Der nicht beanspruchte Träger 3 nach Figur 3 weist eine axiale Durchgangsausnehmung 35 auf, welche kreisförmig im Durchmesser ist. Der Magnet 16 ist in den rohrartigen Träger 3 stirnseitig eingesetzt und mit diesem an seinem zweiten Schaftende 30 durch Verkleben fest verbunden.

In der nicht beanspruchten Ausführungsform nach Figur 4 ist der Träger 3 aus Kunststoff ausgebildet und weist am zweiten Schaftende 30 ein Sackloch 38 auf. Der im Querschnitt T-förmige Magnet 16 weist in Bezug auf das Sackloch 38 ein leichtes Übermaß auf, so dass er beim Einbau durch Verpressen sicher fixierbar ist.

Figur 5 zeigt einen weiteren nicht beanspruchten Träger 3 aus Kunststoff mit einem Magneten 16, der am zweiten Schaftende 30 mit umspritzt ist, so dass er mit dem Träger 3 ein einteiliges Bauteil bildet. In dieser Anordnung ist der Magnet 16 in seiner Position gegenüber dem Träger 3 fixiert und kann seine Lage auch durch Bauteilverschleiß nicht ändern. Der Träger 3 aus Kunststoff ist durchlässig für die magnetischen Feldlinien, so dass die Empfindlichkeit nicht beeinträchtigt ist.

Figur 6 zeigt einen erfindungsgemäßen Träger 3, dessen Schaftende 30 verjüngt ausgebildet ist, so dass es einen abschließenden Pin 36 aufweist. Der Signalgeber 16 ist ein Magnet in Form eines nicht notwendigerweise kreisförmigen Zylinders 37 mit zu dem Pin 37 komplementärer Ausnehmung bzw. in Form einer Lochscheibe außenseitig am Träger 3 angeordnet. Der Magnet 16 mit dem gleichen Durchmesser wie der Träger 3 schließt an diesen so an, dass kein Vorsprung entsteht.

Figur 7 zeigt einen Träger 3 mit einem Magneten 16, wobei der Magnet 16 als Hohlzylinder ausgebildet ist. Der Träger 3 ist ein sich an seinem Ende, das den Magneten 16 trägt, verjüngender Elastomerstößel 40. Der Magnet 16 ist auf den Elastomerstößel 40 gefügt, wobei das zuvor über die Länge des Elastomerstößels 40 herausragende Ende 41 (beispielsweise durch Ultraschall) abgeschmolzen ist und der Magnet 16 dadurch fixiert ist.

**Bezugszeichenliste**

| | | | |
|---|---|---|---|
| 1 | Sensorschalteinheit | 31 | Absatz |
| 2 | Schaltbolzen | 32 | Wandung |
| 3 | Schaft | 33 | Rotationsachse |
| 4 | Kalotte | 34 | Kegelspitze |
| 5 | Kugel | 35 | Durchgangsausnehmung |
| 6 | Wälzkugeln | 36 | Pin |
| 7 | Wälzlager | 37 | Zylinder |
| 8 | Arretiergehäuse | 38 | Sackloch |
| 9 | Bohrung | 39 | Bohrungsboden |
| 10 | Feder | 40 | Elastomerstößel |
| 11 | erster Abschnitt | 41 | Ende |
| 12 | zweiter Abschnitt | | |
| 13 | dritter Abschnitt | | |
| 14 | Dopplung | | |
| 15 | Bord | | |
| 16 | Signalgeber | | |
| 17 | Sensor | | |
| 18 | Ablaufbahn | | |
| 19 | Gehäuse | | |
| 20 | Steckkontakt | | |
| 21 | Druckstift | | |
| 22 | Boden | | |
| 23 | Ausnehmung | | |
| 24 | Aufnahme | | |
| 25 | Schaltarretierung | | |
| 26 | Hülse | | |
| 27 | erstes Sensorikelement | | |
| 28 | zweites Sensorikelement | | |
| 29 | erstes Schaftende | | |
| 30 | zweites Schaftende | | |

## Patentansprüche

1. Sensorschalteinheit (1) zur Bestimmung von Stellungen wenigstens eines Getriebebauteils, bestehend aus
- einer Schaltarretierung (25) zum Arretieren von Getriebeschaltpositionen, wobei die Schaltarretierung (25) ein Arretiergehäuse (8), einen Schaltbolzen (2), der hubbeweglich in dem Arretiergehäuse (8) gelagert und gegen das Getriebebauteil vorspannbar ist, und einen mit dem Schaltbolzen in Wirkverbindung stehendem Träger (3) aufweist,
- einer kontaktlosen Sensorik (15) mit einem Signalgeber (16) als erstem Sensorikelement (27) und einem Sensor (17) als zweiten Sensorikelement (28),
- und einem Gehäuse (19) mit einer Aufnahme (24) für die Schaltarretierung (25),
- wobei der Träger (3) und der Signalgeber (16) miteinander derart verbunden sind, dass der Träger im Längsschnitt gesehen außenseitig keinen Absatz aufweist,
**dadurch gekennzeichnet,**
- **dass** der Signalgeber (16) als ein Magnet in Form eines Zylinders (37) ausgebildet ist,
- **dass** der Träger (3) ein vejüngtes Schaftende (30) mit einem Pin (36) aufweist und
- **dass** der Signalgeber (16) mit einer zu dem Pin (36) komplementären Ausnehmung oder in Form einer Lochscheibe außenseitig am Träger (3) angeordnet ist
- und **dass** der Signalgeber (16) den gleichen Durchmesser wie der Träger (3) aufweist, so dass kein Vorsprung entsteht.

2. Sensorschalteinheit nach Anspruch 1, **dadurch gekennzeichnet, dass** der gesamte Träger aus ferromagnetischem Material ausgebildet ist.

3. Sensoranordnung nach Anspruch 1, **dadurch gekennzeichnet, dass** der Signalgeber (16) mit dem Träger (3) verschraubt ist.

4. Sensoranordnung nach Anspruch 1, **dadurch gekennzeichnet, dass** der Signalgeber (16) in den Träger (3) verpresst ist.

5. Sensoranordnung nach Anspruch 1, **dadurch gekennzeichnet, dass** der Signalgeber (16) mit dem Träger (3) verklebt ist.

6. Sensoranordnung nach Anspruch 1, **dadurch gekennzeichnet, dass** der Signalgeber (16) mit Kunststoff umspritzt ist.

7. Sensoranordnung nach Anspruch 1, **dadurch gekennzeichnet, dass** der Träger (3) einen unrunden Querschnitt aufweist.

8. Sensoranordnung nach Anspruch 1, **dadurch gekennzeichnet, dass** der Träger aus einem Elastomerwerkstoff ausgebildet ist.

## Claims

1. Sensor shift unit (1) for determining positions of at least one transmission component, comprising
- a shift locking means (25) for locking transmission shift positions, wherein the shift locking means (25) has a locking housing (8), a shift pin (2) which is mounted such that it can move back and forth in the locking housing (8) and can be prestressed in relation to the transmission component, and a support (3) which is operatively connected to the shift pin,
- a contactless sensor system (15) having a signal transmitter (16) as a first sensor system element (27) and having a sensor (17) as a second sensor system element (28),
- and a housing (19) having a receptacle (24) for the shift locking means (25),
- wherein the support (3) and the signal transmitter (16) are connected to one another in such a way that the support does not have a projection on the outside as seen in the longitudinal section,
**characterized**
- **in that** the signal transmitter (16) is designed as a magnet in the form of a cylinder (37),
- **in that** the support (3) has a tapering shaft end (30) with a pin (36), and
- **in that** the signal transmitter (16), with a recess which complements the pin (36) or in the form of a perforated disc, is arranged on the outside of the support (3),
- and **in that** the signal transmitter (16) has the same diameter as the support (3) and therefore no protrusion is produced.

2. Sensor shift unit according to Claim 1, **characterized in that** the entire support is formed from ferromagnetic material.

3. Sensor shift unit according to Claim 1, **characterized in that** the signal transmitter (16) is screwed to the support (3).

4. Sensor shift unit according to Claim 1, **characterized in that** the signal transmitter (16) is pressed into the support (3).

5. Sensor shift unit according to Claim 1, **characterized in that** the signal transmitter (16) is adhesively bonded to the support (3).

6. Sensor shift unit according to Claim 1, **characterized in that** the signal transmitter (16) is encapsulated in plastic.

7. Sensor shift unit according to Claim 1, **characterized in that** the support (3) has a non-round cross section.

8. Sensor shift unit according to Claim 1, **characterized in that** the support is formed from an elastomeric material.

## Revendications

1. Unité (1) de commutation à capteur destinée à déterminer les positions d'au moins un composant d'une transmission, l'unité étant constituée de :
un blocage de commutation (25) qui bloque les positions de commutation de la transmission, le blocage de commutation (25) présentant un boîtier de blocage (8), un goujon de commutation (2) monté en va-et-vient dans le boîtier de blocage (8) et apte à être précontraint contre le composant de la transmission et un support (3) qui coopère avec le goujon de commutation,
un ensemble (15) de capteur sans contact doté d'un émetteur (16) de signaux comme premier élément (27) de l'ensemble de capteur et d'un capteur (17) comme deuxième élément (28) d'ensemble de capteur,
un boîtier (19) doté d'un logement (24) pour le blocage de commutation (25),
le support (3) et l'émetteur de signaux (16) étant raccordés l'un à l'autre de telle sorte que vu en coupe longitudinale, le support ne présente pas de retrait extérieur,
**caractérisée en ce que**
L'émetteur de signaux (16) est réalisé comme un aimant sous la forme d'un cylindre (37),
le support (3) présente une extrémité d'arbre (30) amincie dotée d'une pointe (36),
**en ce que** l'émetteur (16) de signaux est disposé à l'extérieur du support (3) avec un logement complémentaire de la pointe (36) ou sous la forme d'une plaque perforée et
**en ce que** l'émetteur (16) de signaux présente le même diamètre que le support (3), de telle sorte qu'aucune saillie n'est formée.

2. Unité de commutation à capteur selon la revendication 1, **caractérisée en ce que** l'ensemble du support est réalisé en matériau ferromagnétique.

3. Unité de commutation à capteur selon la revendication 1, **caractérisé en ce que** l'émetteur de signaux (16) est vissé sur le support (3).

4. Unité de commutation à capteur selon la revendication 1, **caractérisé en ce que** l'émetteur de signaux (16) est repoussé dans le support (3).

5. Unité de commutation à capteur selon la revendication 1, **caractérisé en ce que** l'émetteur de signaux (16) est collé sur le support (3).

6. Unité de commutation à capteur selon la revendication 1, **caractérisé en ce que** l'émetteur de signaux (16) est englobé de matière synthétique.

7. Unité de commutation à capteur selon la revendication 1, **caractérisé en ce que** le support (3) présente une section transversale non circulaire.

8. Unité de commutation à capteur selon la revendication 1, **caractérisé en ce que** le support est réalisé en un matériau élastomère.
